# EUROPEAN PATENT APPLICATION

(11) **EP 4 601 034 A1**
(43) Date of publication of application: **13.08.2025**
(21) Application number: 24861354.9
(22) Date of filing: 17.06.2024
(51) Int. Cl.: H01M 4/36, H01M 4/38, H01M 4/62, H01M 4/04, H01M 10/0525, C01B 33/025, C01B 32/05, C01B 32/20

(54) **NEGATIVE ELECTRODE MATERIAL AND BATTERY**

(30) Priority: 21.12.2023 CN 202311778680
(71) Applicant: BTR NEW MATERIAL GROUP CO., LTD., Shenzhen, Guangdong 518106 (CN); Huizhou Dingyuan New Energy Technology Co., Ltd., Huizhou, Guangdong 516227 (CN)
(72) Inventor: AN, Weili, Shenzhen, Guangdong 518106 (CN); HE, Peng, Shenzhen, Guangdong 518106 (CN); REN, Jianguo, Shenzhen, Guangdong 518106 (CN); HE, Xueqin, Shenzhen, Guangdong 518106 (CN)
(74) Representative: Studio Torta S.p.A.
(86) International application number: PCT/CN2024/099682
(87) International publication number: WO 2025/129959

(57) **Abstract**

Provided are anode material and battery. The anode material includes a primary particle. The primary particle includes silicon grains. An average particle size of the silicon grains of the anode material measured at 25 °C is M0 nm. After the anode material is heated to 1000 °C under nitrogen protection and then subjected to temperature holding for 1 h, the average particle size of the silicon grains of the anode material measured at a temperature naturally cooled to 25 °C is M1 nm. A crystallization instability degree of the anode material is F, where F=(M₁-M₀)/M₀, M₁> M₀, and 0.01≤F≤500. According to the anode material provided in the present disclosure, the problem of stress concentration caused by the primary particle including the silicon grains in a lithium deintercalation process may be attenuated, such that the structure stability of the anode material is improved, and an expansion rate of the material is reduced, thereby improving the electrochemical performance and cycling performance of the anode material.

## Description

### Technical Field

The present disclosure relates to the technical field of anode materials, and in particular, to anode material and battery.

### Background

Because of the advantages of large energy density, high output power, long cycle life, small environmental pollution, etc., lithium-ion batteries are widely applied to electric vehicles and consumer electronics.

In order to increase the energy density of the battery, the research and development of a silicon anode material, which is one of the important materials for lithium-ion batteries, is becoming more and more mature. However, the existing silicon anode material has a large volumetric expansion (>300%) in lithium deintercalation process. The silicon anode material is pulverized during charging and discharging and falls off from a current collector, causing the loss of electrical contact between silicon particles and the current collector, resulting in poor electrochemical performance, capacity fading, and reduction in cyclic stability, and thus being hardly applied commercially. In order to improve the conductivity and cycling stability of the silicon anode material, carbon coating may be used. An existing carbon coating preparation method is complex in step, and simple carbon coating cannot effectively improve the electrochemical performance of a silicon-carbon anode.

Based on this, there is an urgent need to develop a silicon-carbon anode material with a long cycle and a low expansion.

### Summary

The present disclosure provides anode material and battery, causing the anode material to have high first coulombic efficiency, excellent cycling stability, and low expansion performance.

In first aspect, the present disclosure provides an anode material. The anode material includes a silicon matrix. The silicon matrix includes silicon grains. An average particle size of the silicon grains of the anode material measured at 25 °C is M₀ nm. After the anode material is heated to 1000 °C under nitrogen protection and then subjected to temperature holding for 1 h, the average particle size of the silicon grains of the anode material measured at a temperature naturally cooled to 25 °C is M₁ nm. A crystallization instability degree of the anode material is F, where F=(M₁-M₀)/M₀, M1 > M₀, and 0.01≤F≤500.

In second aspect, the present disclosure provides a battery. The battery includes the above anode material.

The technical solution of the present disclosure has at least the following beneficial effects.

In the present disclosure, by controlling the crystallization instability degree of the anode material to be F, where 0.01≤F≤500, a grain boundary surface energy of the silicon matrix may be reduced, a stress concentration phenomenon caused by the silicon matrix in a lithium deintercalation process may be attenuated, an electrochemical sintering phenomenon of the anode material after lithium intercalation is improved, the structure stability of the silicon matrix in a lithiation process is improved, and an expansion rate of the anode material is reduced, facilitating formation of a stable solid-state electrolyte membrane, thereby improving the electrochemical performance of the anode material.

### Brief Description of the Drawings

Fig. 1 is a schematic structural diagram of an anode material according to an embodiment of the present disclosure.
Fig. 2 is a schematic flowchart of a method for preparing an anode material according to an embodiment of the present disclosure.
Fig. 3 is an X-Ray Diffraction (XRD) diagram of a silicon-carbon composite anode material according to Embodiment 1 of the present disclosure.
Fig. 4a and Fig. 4b respectively are a scanning electron microscope picture and an internal cross-sectional view of an anode material prepared according to Embodiment 1.
Fig. 5a is a transmission electron microscope diagram of an anode material prepared according to Embodiment 1.
Fig. 5b is a partial enlarged view of a transmission electron microscope diagram of an anode material prepared according to Embodiment 1.
Fig. 6 is a cycling performance curve of an anode material prepared according to Embodiment 1.

### Detailed Description of the Embodiments

The following are preferred implementations of embodiments present disclosure, and it should be noted that persons of ordinary skill in the art may also make several improvements and refinements without departing from the principle of the embodiments of the present disclosure, and it should be considered that these improvements and refinements shall all fall within the protection scope of the embodiments of the present disclosure.

At present, in lithium-ion batteries, anode materials are one of the key materials affecting the charge-discharge performance of the lithium-ion batteries. In order to increase the energy density of the battery, the research and development of high-capacity anode materials is becoming more mature. However, these anode materials have large volumetric expansion in an alloying process with lithium, and are pulverized during charging and discharging and fall off from a current collector, causing the loss of an electrical contact between the anode materials and the current collector, resulting in poor electrochemical performance of a battery, capacity fading, and reduction in cyclic stability, and thus being hardly applied commercially.

In first aspect, the present disclosure provides an anode material. The anode material includes a primary particle. The primary particle includes silicon grains. An average particle size of the silicon grains of the anode material measured at 25 °C is M₀ nm. After the anode material is heated to 1000 °C under nitrogen protection and then subjected to temperature holding for 1 h, the average particle size of the silicon grains of the anode material measured at a temperature naturally cooled to 25 °C is M₁ nm. A crystallization instability degree of the anode material is F, where F=(M₁-M₀)/M₀, M₁>M₀, and 0.01≤F≤500.

In the above solution, according to the present disclosure, by controlling the crystallization instability degree of the anode material to be F, where 0.01≤F≤500, a grain boundary surface energy of the silicon grain may be reduced, a stress concentration phenomenon caused by the anode material including the silicon grain in a lithium deintercalation process may be attenuated, an electrochemical sintering phenomenon of the anode material after lithium intercalation is improved, the structure stability of the anode material including the silicon grain in a lithiation process is improved, and an expansion rate of the anode material is reduced, facilitating formation of a stable solid-state electrolyte membrane on a surface of the anode material, thereby improving the electrochemical performance of the anode material. In the specification, "primary particle" refers to a minimum particle unit that is identified when an anode active material is observed by a scanning electron microscope. The primary particle in the present disclosure is a polysilicon granule or a monocrystalline silicon particle. "Secondary particle" refers to a secondary structure that is formed through aggregation of a plurality of primary particles.

In some implementations, a crystallization instability degree of the anode material is F, where F=(M₁-M₀)/M₀, and 0.01≤F≤500, which may specifically be, for example, 0.01, 0.2, 0.5, 1, 5, 10, 20, 50, 80, 100, 200, 300, 400, or 500, or the like, or may definitely be other values within the above range, which is not limited herein. The crystallization instability degree of silicon in the anode material affects the structure stability of the entire anode material after lithiation. If a crystallization instability degree value of the anode material is smaller, the grain growth of the anode material under a high temperature is more difficult, and a grain boundary energy of the silicon in the anode material is larger, such that a silicon matrix is not easy to occur electrochemical sintering in a lithiation process, stress concentration generated is effectively inhibited, the structure stability of the anode material is guaranteed, and an expansion rate of the anode material is reduced, facilitating formation of a stable solid-state electrolyte membrane on a surface of the anode material, thereby improving the electrochemical performance and cycling performance of the anode material.

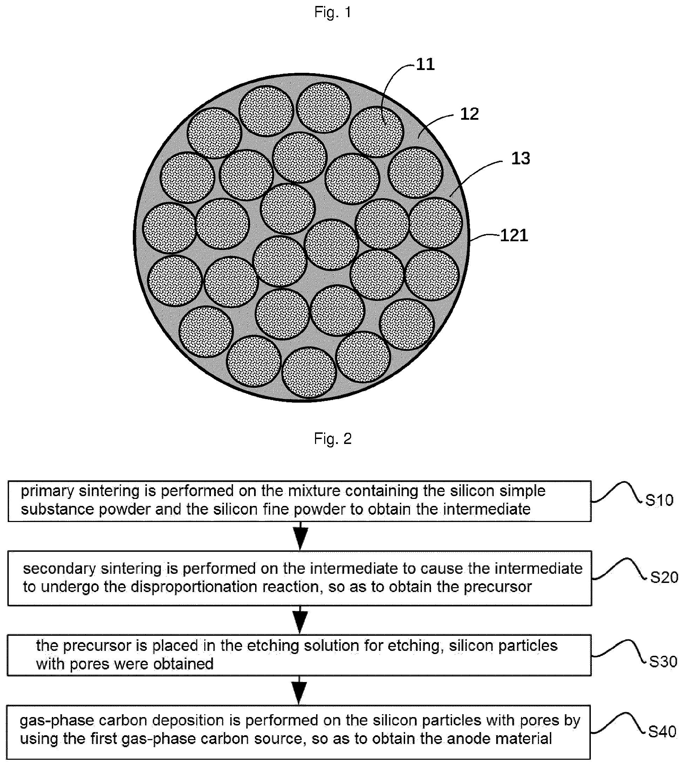

As shown in Fig. 1, in some implementations, an average particle size of the primary particle 11 is 1 nm-100 nm, which may specifically be, for example, 1 nm, 5 nm, 10 nm, 15 nm, 20 nm, 30 nm, 40 nm, 50 nm, 80 nm, or 100 nm, and is not limited herein. In some implementations, an average particle size of the silicon grains of the anode material measured at 25 °C is M₀ nm, where 0.1≤M₀≤20, which may specifically be, for example, 0.1 nm, 1 nm, 3 nm, 5 nm, 8 nm, 10 nm, 12 nm, 15 nm, 18 nm, or 20 nm, and is not limited herein.

In some implementations, after the anode material is heated to 1000 °C at a heating rate of 5 °C/min and then subjected to temperature holding for 1 h, the average particle size of the silicon grains of the anode material measured at the temperature naturally cooled to 25 °C is M₁ nm, where 0.1<M₁≤50, which may specifically be, for example, 0.11 nm, 1 nm, 3 nm, 5 nm, 8 nm, 10 nm, 15 nm, 20 nm, 30 nm, 35 nm, 40 nm, 45 nm, or 50 nm, and is not limited herein. Preferably, 1≤M₁≤30.

It may be understood that, the average particle size of the silicon grains is less than or equal to the average particle size of the primary particle.

In some implementations, as shown in Fig. 1, the anode material includes a secondary particle 13. The secondary particle 13 includes a matrix 12 and the primary particle 11 dispersed in the matrix 12. In the secondary particle 13 of the anode material, the primary particle 11 is dispersed in the matrix 12. The matrix has high conductivity, such that the conductivity of the primary particle 11 may be improved. Furthermore, the matrix 12 itself has certain strength, and may relieve volume expansion of the silicon grain by being coating on a surface of the primary particle 11, such that volume expansion of the anode material including the silicon grain can be effectively relieved.

In some implementations, the anode material includes the secondary particle. The secondary particle includes the matrix and the primary particle dispersed in the matrix. The primary particle has pores, and at least part of the matrix is distributed in the pores of the primary particle. Compared to a primary particle without pores, the primary particle including the silicon grain in this embodiment may relieve self-volume expansion, such that the expansion performance of the anode material in the embodiments of the present disclosure is better.

In some implementations, pores are formed on surfaces of the silicon grains through etching treatment, such that the primary particle have the pores, facilitating the entering of at least partial matrix in the pores of the primary particle.

In some implementations, partial matrix is also coated on a surface of the secondary particle, such that the volume expansion of the anode material may be further relieved, and side reactions between the primary particle and electrolyte may also be effectively reduced. Meanwhile, the structure stability of the anode material is improved, such that the anode material has low expansion, high cycling stability, high rate performance, and high first coulombic efficiency.

It may be understood that, the matrix includes a carbon material, and may be replaced by other materials having the same performance, for example, a non-carbon matrix material, including at least one of a metal oxide, silicide, silicate, phosphate, titanate, and aluminum borate salt. It may be understood that, a non-carbon matrix may play a role in supporting a skeleton by using the above materials. Furthermore, compared with an existing conductive carbon matrix, the non-carbon matrix used in the present disclosure has better strength and stiffness, such that the anode material may have a higher compaction density during battery preparation, the structure stability of the anode material can be improved, and particle crushing and chalking of the anode material are reduced, thereby improving the cycling performance of the anode material. Meanwhile, due to electronic insulation, the non-carbon matrix generally has good ionic conductivity, and thus may act similarly to artificial SEI membranes, such that generation of subsequent natural SEI membranes can be slowed down, and a direct contact between the anode material and electrolyte is reduced, thereby reducing the occurrence of the side reactions. Furthermore, the non-carbon matrix has the advantages of lower costs compared to a carbon matrix. Due to the complexity of an activated pore-making process, an existing carbon matrix is relatively high in involved energy consumption and environment cost. If natural substances with porous pores such as porous ceramic are used, complex pore-making processes are saved, such that the costs may be reduced to 10% of the costs of a porous carbon matrix, or even lower.

In some implementations, the carbon material includes at least one of amorphous carbon and graphitized carbon. The primary particle 11 is dispersed in the carbon material, such that the conductivity of the primary particle 11 may be improved, and volume expansion of the primary particle 11 can also be effectively relieved.

In some implementations, the anode material further includes a coating material 121, which is coated on at least partial surface of the secondary particle 13. The coating material includes at least one of an amorphous carbon material, a graphitized carbon material, and a polymer.

In some implementations, the coating material is coated at least partial surface of the secondary particle and forms a coating layer, and a thickness of the coating layer is 5 nm-500 nm.

It may be understood that, the coating layer is constructed on the surface of the secondary particle, and the coating layer may further relieve the volume expansion of the anode material. By using the coating layer to perform collaborative modification on the secondary particle, the volume expansion of the primary particle may be effectively relieved, such that it ensures that the anode material still has excellent electrical contact performance after lithium intercalation. Furthermore, the coating layer on the surface may reduce invasion of the electrolyte, so as to reduce a contact between the electrolyte and the primary particle, thereby effectively reducing the side reactions between the primary particle and the electrolyte, and simultaneously improving the structure stability of the anode material.

In some implementations, the coating material includes the polymer, and the polymer may include at least one of diblock copolymer, triblock copolymer, and multiblock copolymer.

In some implementations, the coating material includes the polymer, and the thickness of the coating layer formed by the coating material is 50 nm-300 nm, which may specifically be, for example, 50 nm, 80 nm, 100 nm, 150 nm, 200 nm, 250 nm, or 300 nm, or a range composed of any two of these numerical values, and is not limited herein. When the thickness of the coating layer formed by the coating material is less than 50 nm, volume expansion of a silicon material may crack the coating layer, resulting in poor cycling performance. When the thickness of the coating layer formed by the coating material exceeds 300 nm, the coating layer is too thick, causing the entering of lithium ions to be difficult, thus affecting a capacity.

In some implementations, the polymer includes at least one of polyacrylic acid, polyacrylonitrile, polyimide, polyurethane, polydopamine, xanthan gum, polypyrrole, polythiophene, polyphenylacetylene, polyaniline, polyacetylene, and tannic acid. The polymer preferably is at least one of the polypyrrole, the polythiophene, the polyaniline, the polyaniline and the polyacetylene.

In some implementations, the coating material includes the graphitized carbon material, and the thickness of the coating layer formed by the coating material is 5 nm-100 nm, which may specifically be, for example, 5 nm, 10 nm, 30 nm, 50 nm, 70 nm, 80 nm, 90 nm, or 100 nm, or a range composed of any two of these numerical values, and is not limited herein. It may be understood that, due to high conductivity and strength of the graphitized carbon material, by controlling the thickness of the coating layer within 5 nm-100 nm, although the thickness is relatively low, an effect of improving cycling performance and capacity may also be achieved.

In some implementations, the coating material includes the amorphous carbon material, and the thickness of the coating layer formed by the coating material is 10 nm-500 nm, such that a lithium ion transfer rate is increased, and the electrolyte is prevented from coming into contact with the silicon material, leading to side reactions. The thickness may specifically be, for example, 10 nm, 50 nm, 80 nm, 100 nm, 150 nm, 200 nm, 250 nm, 300 nm, 450 nm, or 500 nm, or a range composed of any two of these numerical values, and is not limited herein.

In some implementations, a pore volume of the anode material is 0.01 cm³/g-0.2 cm³/g, facilitating relieving of volume expansion, and thus causing a structure to be more stable. When the pore volume of the anode material is less than 0.01 cm³/g, it is not favorable to alleviate volume expansion. Furthermore, when the pore volume of the anode material is greater than 0.2 cm³/g, the structure is unstable due to the too large pore volume. The pore volume may specifically be, for example, 0.01 cm³/g, 0.03 cm³/g, 0.05 cm³/g, 0.08 cm³/g, 0.1 cm³/g, 0.13 cm³/g, 0.15 cm³/g, 0.18 cm³/g, or 0.2 cm³/g, or a range composed of any two of these numerical values, and is not limited herein.

In some implementations, a powder tap density of the anode material is 0.3 g/cm³-1.3 g/cm³, which may specifically be, for example, 0.3g/cm³, 0.5g/cm³, 0.6g/cm³, 0.7g/cm³, 0.8g/cm³, 1.0 g/cm³, or 1.3g/cm³, or a range composed of any two of these numerical values, and is not limited herein. The powder tap density of the anode material is preferably 0.6 g/cm³-0.9 g/cm³.

In some implementations, a powder compaction density of the anode material is 1.2 g/cm³-1.8 g/cm³, for example, 1.2 g/cm³, 1.3 g/cm³, 1.4 g/cm³, 1.5 g/cm³, 1.6 g/cm³, or 1.8 g/cm³, or a range composed of any two of these numerical values, and is not limited herein. When the compaction density is less than 1.2 g/cm³, it is easy to cause relatively-high porosity of a final electrode plate, resulting in a reduction in battery energy density; and when the compaction density is greater than 1.8 g/cm³, the porosity is too low, not facilitating the entering of the electrolyte, leading to a reduction in capacity. Further, the powder compaction density of the anode material is preferably 1.45 g/cm³-1.75 g/cm³.

In some implementations, a median particle size of the anode material is 0.5 µm-26 µm, and optionally, the median particle size of the anode material may specifically be, for example, 0.5 µm, 1 µm, 3 µm, 4 µm, 5 µm, 7 µm, 10 µm, 13 µm, 15 µm, 20 µm, or 26 µm, or a range composed of any two of these numerical values, and is not limited herein. Considering the compaction density and the volume expansion of the material itself, the median particle size is too small, the compaction density reduces to affect the capacity, and the material expands and becomes larger due to a too large size, causing the structure to be unstable, thus resulting in poor cycling performance. Further, the median particle size of the anode material is preferably 1 µm-10 µm, and more preferably is 3 µm-7 µm.

A specific surface area of the anode material is 0.8 m²/g-40 m²/g. Optionally, the specific surface area of the anode material may be 0.8 m²/g, 1 m²/g, 5 m2/g, 8 m²/g, 10 m²/g, 15 m²/g, 20 m²/g, 25 m²/g, 30 m²/g, 35 m²/g, or 40 m²/g, or a range composed of any two of these numerical values, and is not limited herein. It may be understood that, an excessive specific surface area easily causes the formation of an SEI membrane, consuming too much irreversible lithium salts and reducing the first coulombic efficiency of a battery, such that by comprehensively considering the cost of a preparation process, the specific surface area is controlled to 1 m²/g-20 m²/g.

In some implementations, a mass content of carbon in the anode material is 5%-80%, which may specifically be, for example, 5%, 8%, 10%, 15%, 20%, 30%, 35%, 40%, 45%, 50%, 60%, 70%, or 80%, or a range composed of any two of these numerical values, and is not limited herein. Too low carbon content is not favorable to improving conductivity and protecting the silicon material from coming into contact with the electrolyte, and excessive content of the carbon material causes the capacity to reduce. It should be noted that, the carbon in the anode material is derived from the carbon material.

In some implementations, a mass content of oxygen in the anode material is < 15%, which may specifically be, for example, 5%, 6%, 8%, 10%, 12%, 13%, 14%, or 14.9%, or a range composed of any two of these numerical values, and is not limited herein. It may be understood that, too much oxygen causes exacerbation of the side reactions, generating irreversible silicate, and thus resulting in reduction in first coulombic efficiency.

In some implementations, a mass content of silicon in the anode material is 40%-80%, which may specifically be, for example, 40%, 42%, 45%, 48%, 50%, 55%, 60%, 65%, 68%, 70%, or 80%, or a range composed of any two of these numerical values, and is not limited herein. It may be understood that, too little silicon in the anode material causes the capacity to be small, and too much silicon causes large volume expansion of the material, leading to poor cycle life.

The present disclosure further provides a method for preparing an anode material. As shown in Fig. 2, the preparation method includes the following steps.

At S10, primary sintering is performed on a mixture containing silicon simple substance powder and silicon fine powder to obtain an intermediate.

At S20, secondary sintering is performed on the intermediate to cause the intermediate to undergo a disproportionation reaction, so as to obtain a precursor, where a primary particle includes the precursor, the anode material includes the primary particle, the primary particle includes silicon grains. An average particle size of the silicon grains of the anode material measured at 25 °C is M₀ nm. After the anode material is heated to 1000 °C under nitrogen protection and then subjected to temperature holding for 1 h, the average particle size of the silicon grains of the anode material measured at a temperature naturally cooled to 25 °C is M₁ nm. A crystallization instability degree of the anode material is F, where F=(M₁-M₀)/M₀, M₁ > M₀, and 0.01≤F≤500.

According to the method for preparing an anode material provided in the present disclosure, first, primary sintering is performed on the mixture containing the silicon simple substance powder and the silicon fine powder, such that the silicon simple substance can undergo a reduction reaction with silica to form a silicon oxide (silicon monoxide), then secondary sintering is performed on the silicon oxide, and in this case, the silicon monoxide undergoes the disproportionation reaction. Since the presence of silica the may limit the growth of the silicon grain, the size of the generated silicon grain may be reduced, stress concentration caused by the primary particle in a lithiation process may be attenuated, the structural stability of the primary particle in the lithiation process is improved, and an expansion rate of the anode material is reduced, facilitating formation of a stable solid-state electrolyte membrane, thereby improving the electrochemical performance of the anode material.

In an implementation, the method for preparing an anode material further includes the following step.

At S30, the precursor obtained in S20 is placed in an etching solution for etching, so as to obtain the primary particle. The anode material includes the primary particle. The primary particle includes the silicon grains. The average particle size of the silicon grains of the anode material measured at 25 °C is M₀ nm. After the anode material is heated to 1000 °C under nitrogen protection and then subjected to temperature holding for 1 h, the average particle size of the silicon grains of the anode material measured at the temperature naturally cooled to 25 °C is M₁ nm. A crystallization instability degree of the anode material is F, where F=(M₁-M₀)/M₀, M₁ > M₀, and 0.01≤F≤500.

In an implementation, the method for preparing an anode material further includes the following step.

At S40, gas-phase carbon deposition is performed on the primary particle obtained in S20 or S30 by using a first gas-phase carbon source, so as to obtain secondary particle, where the anode material includes the secondary particle.

It may be understood that, gas-phase carbon deposition is directly performed on the precursor obtained in S20, and the primary particle in the anode material can be dispersed in particles of a matrix and/or among the particles of the matrix, so as to obtain the secondary particle. In the secondary particle of the anode material, the matrix and the primary particle are dispersed with each other, such that the conductivity of the primary particle may be effectively improved, and volume expansion of the primary particle can also be effectively relieved. Partial matrix is located on a surface of the secondary particle, such that the volume expansion of the anode material may be further relieved, and side reactions between the primary particle and electrolyte may also be effectively reduced. Meanwhile, the structure stability of the anode material is improved, such that the anode material has low expansion, high cycling stability, high rate performance, and high first coulombic efficiency.

In another implementation, after redundant silica and other impurities are removed through etching, silicon particles with pores are formed, which is the primary particle, and finally, by performing gas-phase carbon deposition on the primary particle, the matrix can enter the pores of the silicon particles and at least partial surfaces of the silicon particles through deposition, so as to obtain the secondary particle. In the secondary particle of the anode material, the matrix and the primary particle are dispersed with each other, such that the conductivity of the primary particle may be effectively improved, and volume expansion of the primary particle can also be effectively relieved. Partial matrix is located on a surface of the secondary particle, such that the volume expansion of the anode material may be further relieved, and side reactions between the primary particle and electrolyte may also be effectively reduced. Meanwhile, the structure stability of the anode material is improved, such that the anode material has low expansion, high cycling stability, high rate performance, and high first coulombic efficiency.

According to the method for preparing an anode material provided in the present disclosure, the electrochemical performance of the material can be improved, large-scale production is achieved, and the prepared anode material can effectively improve the rate performance and cycling stability of a lithium battery.

The preparation method of the present disclosure is specifically introduced with reference to embodiments.

At S10, primary sintering is performed on the mixture containing the silicon simple substance powder and the silicon fine powder to obtain the intermediate.

In some implementations, a mass content of oxygen in the silicon fine powder is ≤ 5%, which may specifically be, for example, 5%, 4.5%, 4%, 3.5%, 3%, 2.5%, 2%, 1.5%, or 1%, or a range composed of any two of these numerical values, and may definitely be other values within the above range, which is not limited herein.

In some implementations, a molar ratio of the silicon simple substance powder to the silicon fine powder is 1:(0.9-1.1), which may specifically be, for example, 1:0.9, 1:0.95, 1:1.0, 1:1.05, 1:1.08, 1:1.09, or 1:1.1, or a range composed of any two of these numerical values, and may definitely be other values within the above range, which is not limited herein.

In some implementations, S10 may specifically include, for example, the mixture containing the silicon simple substance powder and the silicon fine powder is put into a vacuum reaction chamber, the vacuum reaction chamber is vacuumed until a pressure is ≤ 10 Pa, and then primary sintering is performed.

In some implementations, a temperature of primary sintering is 1150 °C-1650 °C, which may specifically be, for example, 1150 °C, 1200 °C, 1250 °C, 1300 °C, 1350 °C, 1400 °C, 1450 °C, 1500 °C, 1550 °C, 1600 °C, or 1650 °C, or a range composed of any two of these numerical values, and may definitely be other values within the above range, which is not limited herein.

In some implementations, the time for primary sintering is 3 h-12 h, which may specifically be, for example, 3 h, 4 h, 6 h, 8 h, 9 h, 10 h, or 12 h, or a range composed of any two of these numerical values, and may definitely be other values within the above range, which is not limited herein.

In some implementations, a heating rate of primary sintering is 1 °C/min-20 °C/min, which may specifically be, for example, 1 °C/min, 3 °C/min, 5 °C/min, 8 °C/min, 10 °C/min, 15 °C/min, or 20 °C/min, or a range composed of any two of these numerical values, and may definitely be other values within the above range, which is not limited herein.

In some implementations, a pressure of primary sintering is ≤ 10 Pa, which may specifically be, for example, 10 Pa, 9 Pa, 8 Pa, 7 Pa, Pa, 5 Pa, 3 Pa, 2 Pa, or 1 Pa, or a range composed of any two of these numerical values, and may definitely be other values within the above range, which is not limited herein.

At S20, secondary sintering is performed on the intermediate to cause the intermediate to undergo the disproportionation reaction, so as to obtain the precursor.

In some implementations, a temperature of secondary sintering is 200 °C-1050 °C, which may specifically be, for example, 200 °C, 300 °C, 400 °C, 500 °C, 550 °C, 600 °C, 650 °C, 700 °C, 750 °C, 800 °C, 890 °C, 900 °C, 980 °C, or 1050 °C, or a range composed of any two of these numerical values, and may definitely be other values within the above range, which is not limited herein.

In some implementations, the time for secondary sintering is 1 h-48 h, which may specifically be, for example, 1 h, 2 h, 4 h, 6 h, 8 h, 10 h, 15 h, 20 h, 24 h, 30 h, 36 h, 42 h, or 48 h, or a range composed of any two of these numerical values, and may definitely be other values within the above range, which is not limited herein.

In some implementations, a heating rate of secondary sintering is 1 °C/min-30 °C/min, which may specifically be, for example, 1 °C/min, 3 °C/min, 5 °C/min, 8 °C/min, 10 °C/min, 15 °C/min, 20 °C/min, 25 °C/min, or 30 °C/min, or a range composed of any two of these numerical values, and is not limited herein.

In the present disclosure, by controlling the temperature, time, and heating rate of secondary sintering, partial intermediate may undergo the disproportionation reaction, and a reaction general formula is 2SiO=Si+SiO₂. Since the produced silica limits the growth of the silicon grains, small-sized silicon grains can be diffusely distributed in the precursor, such that the primary particle can be formed after subsequent etching.

At S30, the precursor is placed in the etching solution for etching, so as to obtain the primary particle.

It may be understood that, the primary particle with pores is obtained through etching, such that the subsequent matrix enters the pores of the primary particle. Compared to a primary particle without pores, the primary particle in this embodiment may relieve self-volume expansion, such that the expansion performance of the anode material prepared by the preparation method in the embodiments of the present disclosure is better.

In some implementations, a mass ratio of the precursor to the etching solution is 1:(5-20), which may specifically be, for example, 1:5, 1:8, 1:10, 1:12, 1:15, 1:18, or 1:20, or a range composed of any two of these numerical values, and may definitely be other values within the above range, which is not limited herein.

In some implementations, the etching solution contains hydrofluoric acid, water, ethanol, and ammonium fluoride. A mass ratio of the hydrofluoric acid, the water, the ethanol, and the ammonium fluoride is (6-24):3:1:(3-6), which may specifically be, for example, 6:3:1:3, 10:3:1:3, 12:3:1:3, 15:3:1:3, 18:3:1:3, 20:3:1:3, 24:3:1:3, 6:3:1:5, or 6:3:1:6, or a range composed of any two of these numerical values, and may definitely be other values within the above range, which is not limited herein. It may be understood that, the addition of the ammonium fluoride can control a reaction speed, and may reduce oxidation of the silicon particles due to local heat release, so as to reduce formation of inactive silica, thereby increasing a specific capacity of the anode material.

In some implementations, a mass concentration of the hydrofluoric acid is 37%-50%, which may specifically be, for example, 37%, 39%, 40%, 42%, 45%, 46%, 48%, or 50%, or a range composed of any two of these numerical values, and may definitely be other values within the above range, which is not limited herein.

In some implementations, the time for an etching reaction is 0.5 h-10 h, which may specifically be, for example, 0.5 h, 1 h, 2 h, 4 h, 6 h, 8 h, 9 h, or 10 h, or a range composed of any two of these numerical values, and is not limited herein.

In some implementations, a temperature of the etching reaction is ≤ 40 °C, which may specifically be, for example, 40 °C, 38 °C, 36 °C, 35 °C, 32 °C, 30 °C, 28 °C, 25 °C, 20 °C, or 15 °C, or a range composed of any two of these numerical values, and may definitely be other values within the above range, which is not limited herein.

In some implementations, the preparation method further includes washing and drying an etching reaction product.

In some implementations, a mass content of oxygen in the silicon matrix is < 5%, which may specifically be, for example, 4.9%, 4.5%, 4%, 3.5%, 3%, 2.5%, 2%, 1.5%, or 1%, or a range composed of any two of these numerical values, and may definitely be other values within the above range, which is not limited herein.

In some implementations, a mass content of water in the primary particle is < 1%, which may specifically be, for example, 0.99%, 0.9%, 0.8%, 0.6%, 0.5%, 0.4%, 0.3%, 0.2%, or 0.1%, or a range composed of any two of these numerical values, and may definitely be other values within the above range, which is not limited herein.

At S40, gas-phase carbon deposition is performed on the primary particle by using the first gas-phase carbon source, so as to obtain the anode material.

It may be understood that, in the gas-phase carbon deposition process, the first gas-phase carbon source enters the pores of the silicon particles, and forms a carbon material through deposition, and partial carbon material is deposited on surfaces of the silicon particles.

In some implementations, a temperature of gas-phase carbon deposition is 200 °C-1050 °C. Specifically, a reaction temperature may be 200 °C, 300 °C, 400 °C, 500 °C, 550 °C, 600 °C, 650 °C, 700 °C, 750 °C, 800 °C, 890 °C, 900 °C, 980 °C, or 1050 °C, or a range composed of any two of these numerical values. Preferably, the reaction temperature is 700 °C-900 °C.

In some implementations, a temperature-holding time for gas-phase carbon deposition is 1 h-48 h, which may specifically be, for example, 1 h, 4 h, 8 h, 12 h, 16 h, 24 h, 28 h, 32 h, 38 h, or 48 h, or a range composed of any two of these numerical values, and is not limited herein.

In some implementations, the first gas-phase carbon source includes at least one of acetylene, methane, ethylene, propane, toluene, cyclohexane, ethanol, ethylene, propylene, pyrrole, and acetonitrile.

In some implementations, a flow of the first gas-phase carbon source is 0.1 Umin-10 L/min, which may specifically be, for example, 0.1 L/min, 0.4 L/min, 0.6 L/min, 0.8 L/min, 1.0 L/min, 2 L/min, 5 L/min, 6 L/min, 8 L/min, 9 L/min, or 10 L/min, or a range composed of any two of these numerical values, and is not limited herein.

In the present disclosure, by controlling the time, temperature, and temperature-holding time of gas-phase carbon deposition, the reaction efficiency of gas-phase carbon deposition may be improved, such that the carbon material is formed and deposited in the pores of the silicon particles. The carbon material deposited in the pores of the silicon particles can improve the conductivity of the anode material, the carbon material deposited on the surfaces of the silicon particles can also form a carbon layer, and the carbon layer may be an amorphous carbon material, such that volume expansion of the silicon particles is buffered, and the direct contact between the silicon particles and the electrolyte is reduced, thereby improving the cycling performance of the anode material.

After S40, the preparation method further includes: a coating material is used to coat a surface of the secondary particle, where the coating material includes at least one of an amorphous carbon material, a graphitized carbon material, and a polymer.

In some implementations, the step of using the coating material to coat the surface of the secondary particle includes: spray drying is performed on a mixed coating solution containing the secondary particle and the polymer.

In some implementations, a solid content of the secondary particle in the mixed coating solution is 5%-50%, which may specifically be, for example, 5%, 10%, 15%, 20%, 25%, 30%, 35%, 40%, 45%, or 50%, or a range composed of any two of these numerical values, and is not limited herein.

In some implementations, the mixed coating solution includes a polar solvent.

In some implementations, the polar solvent includes at least one of water, anhydrous ethanol, methanol, and isopropanol.

In some implementations, a mass ratio of the secondary particle to the polymer is 10:(0.1-5), may specifically be 10:0.1, 10:1, 10:2, 10:3, 10:4, or 10:5, or a range composed of any two of these numerical values, which is not limited herein.

In some implementations, a drying temperature of spray drying is 60 °C-200 °C, and may specifically be, for example, 60 °C, 80 °C, 100 °C, 120 °C, 150 °C, 180 °C, or 200 °C, or a range composed of any two of these numerical values.

In some implementations, the polymer includes at least one of diblock copolymer, triblock copolymer, and multiblock copolymer.

In some implementations, the polymer includes at least one of polyacrylic acid, polyacrylonitrile, polyimide, polyurethane, polydopamine, xanthan gum, polypyrrole, polythiophene, polyphenylacetylene, polyaniline, polyacetylene, and tannic acid.

In some implementations, the step of using the coating material to coat the surface of the secondary particle includes: a second gas-phase carbon source is introduced into the secondary particle, and heating is performed until the second gas-phase carbon source undergoes a thermal decomposition reaction, so as to deposit and form the coating material on the surface of the secondary particle, where the coating material includes at least one of an amorphous carbon material and a graphitized carbon material.

In some implementations, the second gas-phase carbon source includes at least one of acetylene, methane, toluene, cyclohexane, ethanol, ethylene, and propylene.

In some implementations, a heating rate of the thermal decomposition reaction is 1 °C/min-20 °C/min, which may specifically be, for example, 1 °C/min, 3 °C/min, 5 °C/min, 8 °C/min, 10 °C/min, 15 °C/min, or 20 °C/min, or a range composed of any two of these numerical values, which is not limited herein.

In some implementations, a temperature of the thermal decomposition reaction is 600 °C-1000 °C. Specifically, the reaction temperature may be 600 °C, 650 °C, 700 °C, 750 °C, 800 °C, 890 °C, 900 °C, 960 °C, or 1000 °C, or a range composed of any two of these numerical values. Through a plurality of experiments, the inventor found that, reaction efficiency may be improved by controlling the reaction temperature within 600 °C-1000 °C, such that a uniform carbon layer is formed on the surface of the secondary particle, and the carbon layer may be amorphous carbon. Preferably, the reaction temperature is 700 °C-900 °C.

In some implementations, a temperature-holding time for the thermal decomposition reaction is 1 h-48 h, which may specifically be, for example, 1 h, 4 h, 8 h, 12 h, 16 h, 24 h, 28 h, 32 h, 38 h, or 48 h, or a range composed of any two of these numerical values, and is not limited herein.

In some implementations, a concentration of the gas-phase carbon source is 0.1 Umin-10 L/min, which may specifically be, for example, 0.1 L/min, 0.4 L/min, 0.6 L/min, 0.8 L/min, 1.0 L/min, 2 L/min, 5 L/min, 6 L/min, 8 L/min, 9 L/min, or 10 L/min, or a range composed of any two of these numerical values, and is not limited herein.

In some implementations, the thermal decomposition reaction is undergone under a protective atmosphere.

In some implementations, the protective atmosphere includes at least one of helium, neon, argon, krypton, and xenon.

Embodiments of the present disclosure further provide a battery, including the anode material provided in the embodiments of the present disclosure or an anode material prepared by the method for preparing an anode material provided in the embodiments of the present disclosure. The battery provided in the embodiments of the present disclosure has the advantages of being high in capacity, high in first coulombic efficiency, long in cycle life, excellent in rate performance, and low in expansion. The battery may be a lithium ion battery, a sodium ion battery, a solid-state electrolyte battery, etc., which is not limited herein.

The embodiments of the present disclosure are further described below with a plurality of embodiments. The embodiments of the present disclosure are not limited to the following specific embodiments. Changes may be implemented appropriately within the scope of unchanged primary rights.

### Embodiment 1

(1) Silicon simple substance powder and silicon fine powder (SiO₂) were well mixed according to a molar ratio of 1:1 and then placed in a vacuum sintering furnace, the vacuum sintering furnace was vacuumed to 0.06 Pa and then heated to 1250 °C at a heating rate of 3 °C/min, then a pressure was maintained at 5 Pa, and after temperature holding was performed for 4 h, an intermediate was obtained.
(2) The intermediate was placed in an atmosphere furnace, under argon atmosphere protection, heating was performed to 950 °C at the heating rate of 3 °C/min, then temperature holding was performed for 5 h, and a precursor was obtained through cooling.
(3) 100 g of the precursor was dissolved in a well-prepared etching solution, an etching reaction was performed for 2 h, a reaction temperature in the entire etching process was maintained below 30 °C, the etching solution used a mixed solution in which a mass ratio of hydrofluoric acid: water: ethanol: ammonium fluoride is 12:3:1:4, and after the reaction was completed, a primary particle was obtained after centrifugation and drying.
(4) 500 g of silicon particles were put into a rotary atmosphere furnace, under argon atmosphere protection, a temperature was heated to 950 °C with a heating rate of 3 °C/min, a 0.5 L/min acetylene gas was introduced to cause a volume ratio of argon in the rotary atmosphere furnace to acetylene to be 9:1, after the temperature was held for 4 h, a silicon-carbon composite was obtained through cooling.
(5) 10 g of the silicon-carbon composite was taken and dissolved in 100 g of anhydrous ethanol, 1 g of polyacrylic acid was added, then mechanical stirring was performed for 30 minutes, and by means of spray drying, and a drying temperature was controlled at 100 °C to cause a surface of the silicon-carbon complex to be coated with a polymer, so as to obtain an anode material.

The anode material prepared in this embodiment included a secondary particle and a coating material located on at least partial surface of the secondary particle, and the coating material was a polymer. The secondary particle included a carbon material and the primary particle, which were dispersed with each other. The primary particle included a plurality of silicon grains.

Remaining parameters of the anode material in this embodiment were shown in Table 1.

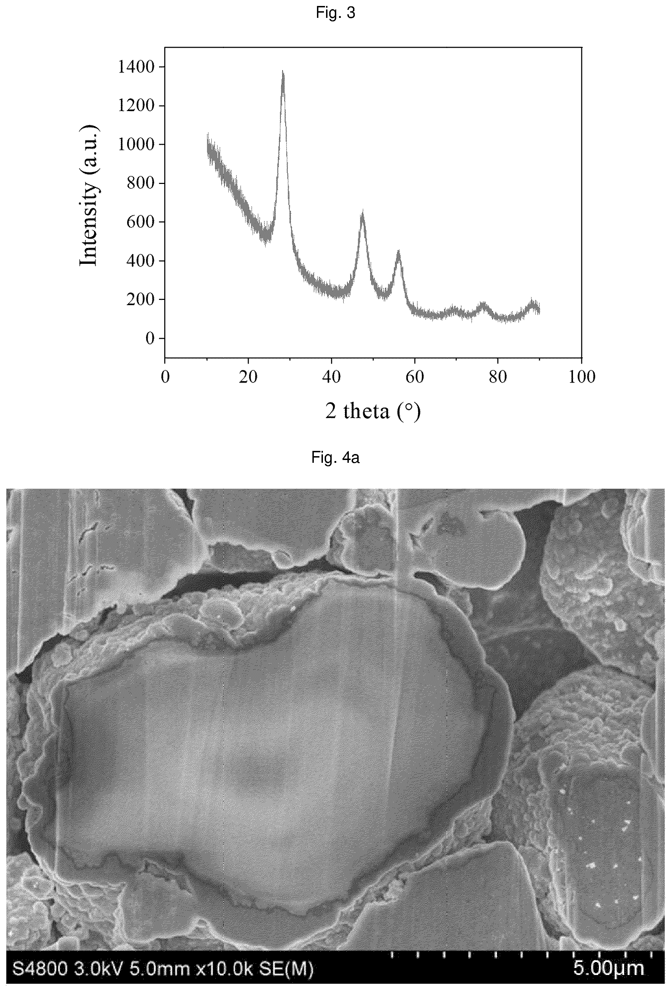

Fig. 3 was an XRD diagram of the anode material in this embodiment. From the XRD diagram in Fig. 3, it might be seen that three strong peaks at 28.4°, 47.3°, and 56.1° corresponded to three strong peaks of silicon (JCPDS No. 27-1402), which was basically free of impure phases. A size of the silicon grain was calculated to be 3.5 nm according to a Scherrer equation.

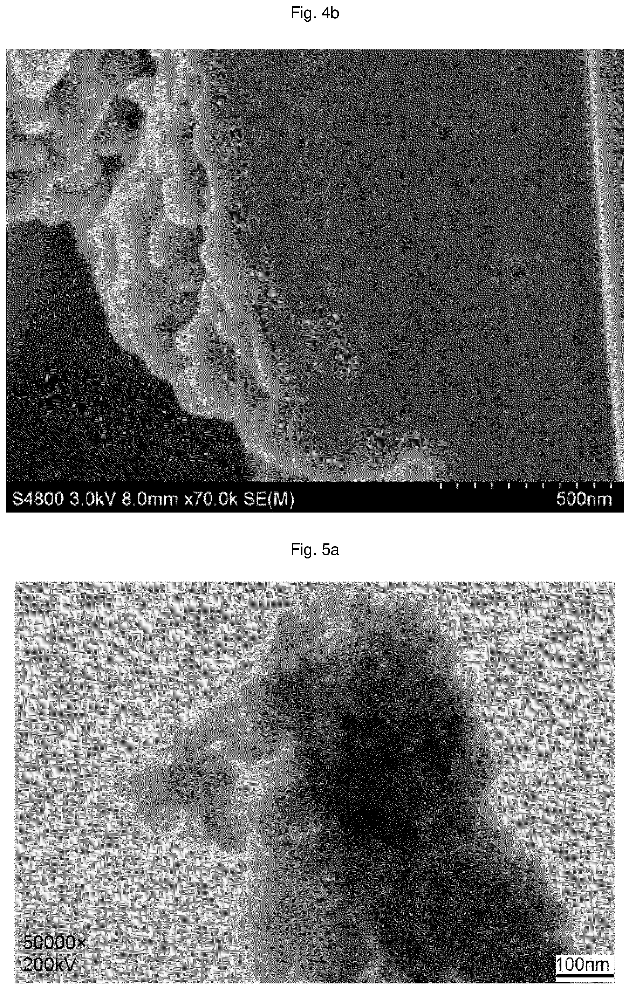

Fig. 4a and Fig. 4b respectively were a scanning electron microscope picture and an internal cross-sectional view of an anode material prepared according to Embodiment 1. As shown in Fig. 4a and Fig. 4b, a surface of the anode material had a compact carbon coating layer.

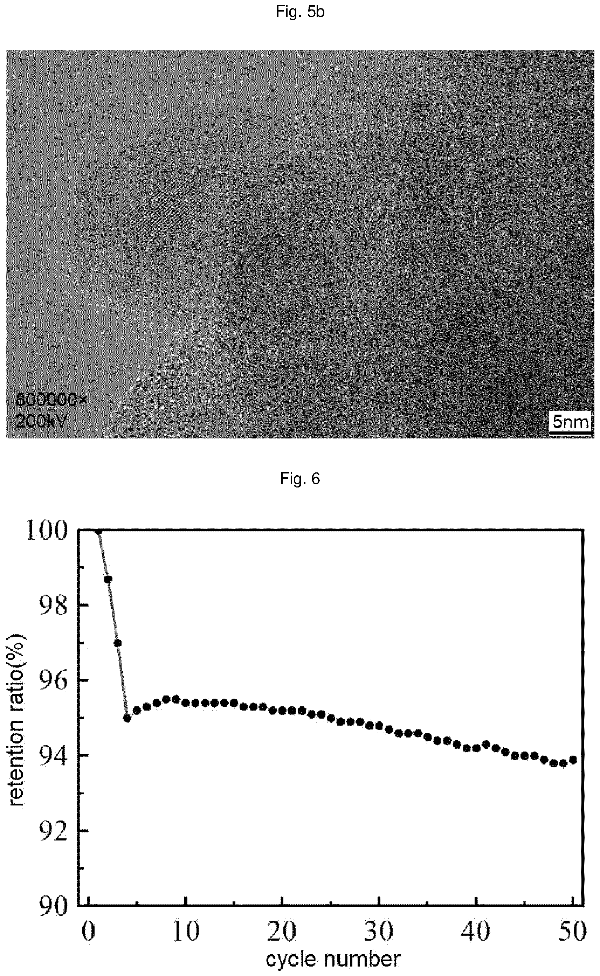

Fig. 5a was a transmission electron microscope diagram of the anode material in this embodiment. Fig. 5b was a partial enlarged view of a transmission electron microscope diagram of the anode material prepared in this embodiment. As shown in Fig. 5a and Fig. 5b, the primary particles in the anode material were uniformly distributed in a carbon matrix.

Fig. 6 was a cycling performance curve of the anode material in this embodiment. As shown in Fig. 6, the anode material had excellent cycling performance, and had capacity retention of 93.8% for 50 cycles at 0.25 C.

### Embodiment 2

(1) Silicon simple substance powder and silicon fine powder (SiO₂) were well mixed according to a molar ratio of 1:1 and then placed in a vacuum sintering furnace, the vacuum sintering furnace was vacuumed to 0.03 Pa and then heated to 1250 °C at a heating rate of 1 °C/min, then a pressure was maintained at 3 Pa, and after temperature holding was performed for 6 h, an intermediate was obtained.
(2) The intermediate was placed in an atmosphere furnace, under argon atmosphere protection, heating was performed to 750 °C at the heating rate of 1 °C/min, then temperature holding was performed for 12 h, and a precursor was obtained through cooling.
(3) 100 g of the precursor was dissolved in a well-prepared etching solution, an etching reaction was performed for 2 h, a reaction temperature in the entire etching process was maintained below 30 °C, the etching solution used a mixed solution in which a mass ratio of hydrofluoric acid: water: ethanol: ammonium fluoride is 12:3:1:4, and after the reaction was completed, a primary particle was obtained after centrifugation and drying.
(4) 500 g of silicon particles were put into a rotary atmosphere furnace, under argon atmosphere protection, a temperature was heated to 750 °C with a heating rate of 3 °C/min, a 4.5 L/min propane gas was introduced to cause a volume ratio of argon in the rotary atmosphere furnace to propane to be 9:1, after the temperature was held for 4 h, a silicon-carbon composite was obtained through cooling.
(5) 10 g of the silicon-carbon composite was put into the rotary atmosphere furnace, under the protection of the argon atmosphere, the temperature was heated to 600 °C with the temperature rising rate of 1 °C/min, a 0.2 L/min propane gas was introduced to cause a volume ratio of argon in the rotary atmosphere furnace to propane to be 9:1, the propane gas was turned off after the temperature was held for 6 h, and an anode material was obtained after cooling.

The anode material prepared in this embodiment included a secondary particle and a coating material located on at least partial surface of the secondary particle, and the coating material was a polymer. The secondary particle included a carbon material and the primary particle, which were dispersed with each other. The primary particle included a plurality of silicon grains.

Remaining parameters of the anode material in this embodiment were shown in Table 1.

### Embodiment 3

(1) Silicon simple substance powder and silicon fine powder (SiO₂) were well mixed according to a molar ratio of 1:1 and then placed in a vacuum sintering furnace, the vacuum sintering furnace was vacuumed to 0.01 Pa and then heated to 1150 °C at a heating rate of 1 °C/min, then a pressure was maintained at 2 Pa, and after temperature holding was performed for 8 h, an intermediate was obtained.
(2) The intermediate was placed in an atmosphere furnace, under argon atmosphere protection, heating was performed to 650 °C at the heating rate of 1 °C/min, then temperature holding was performed for 12 h, and a precursor was obtained through cooling.
(3) 100 g of the precursor was dissolved in 100 g of a well-prepared etching solution, an etching reaction was performed for 2 h, a reaction temperature in the entire etching process was maintained below 20 °C, the etching solution used a mixed solution in which a mass ratio of hydrofluoric acid: water: ethanol: ammonium fluoride is 6:3:1:3, and after the reaction was completed, a primary particle was obtained after centrifugation and drying.
(4) 500 g of silicon particles were put into a rotary atmosphere furnace, under argon atmosphere protection, a temperature was heated to 650 °C with a heating rate of 3 °C/min, a 5.5 L/min propane gas was introduced to cause a volume ratio of argon in the rotary atmosphere furnace to propane to be 9:1, after the temperature was held for 8 h, a silicon-carbon composite was obtained through cooling.
(5) 10 g of the silicon-carbon composite was taken and dissolved in 100 g of anhydrous ethanol, 1 g of polyacrylic acid was added, then mechanical stirring was performed for 30 minutes, and by means of spray drying, and a drying temperature was controlled at 110 °C to cause a surface of the silicon-carbon complex to be coated with a polymer, so as to obtain an anode material.

The anode material prepared in this embodiment included a secondary particle and a coating material located on at least partial surface of the secondary particle, and the coating material was a polymer. The secondary particle included a carbon material and the primary particle, which were dispersed with each other. The primary particle included a plurality of silicon grains.

Remaining parameters of the anode material in this embodiment were shown in Table 1.

### Embodiment 4

(1) Silicon simple substance powder and silicon fine powder (SiO₂) were well mixed according to a molar ratio of 1:1 and then placed in a vacuum sintering furnace, the vacuum sintering furnace was vacuumed to 0.075 Pa and then heated to 1650 °C at a heating rate of 10 °C/min, then a pressure was maintained at 9 Pa, and after temperature holding was performed for 8 h, an intermediate was obtained.
(2) The intermediate was placed in an atmosphere furnace, under argon atmosphere protection, heating was performed to 1050 °C at the heating rate of 30 °C/min, then temperature holding was performed for 12 h, and a precursor was obtained through cooling.
(3) 100 g of the precursor was dissolved in 100 g of a well-prepared etching solution, an etching reaction was performed for 2 h, a reaction temperature in the entire etching process was maintained below 20 °C, the etching solution used a mixed solution in which a mass ratio of hydrofluoric acid: water: ethanol: ammonium fluoride is 6:3:1:3, and after the reaction was completed, a primary particle was obtained after centrifugation and drying.
(4) 500 g of silicon particles were put into a rotary atmosphere furnace, under argon atmosphere protection, a temperature was heated to 950 °C with a heating rate of 5 °C/min, a 2 L/min propane gas was introduced to cause a volume ratio of argon in the rotary atmosphere furnace to propane to be 9:1, after the temperature was held for 8 h, a silicon-carbon composite was obtained through cooling.
(5) 100 g of the silicon-carbon composite was put into the rotary atmosphere furnace, under the protection of the argon atmosphere, the temperature was heated to 950 °C with the temperature rising rate of 10 °C/min, a 4 L/min acetylene gas was introduced to cause a volume ratio of argon in the rotary atmosphere furnace to acetylene to be 9:1, the acetylene gas was turned off after the temperature was held for 6h, and an anode material was obtained after cooling.

The anode material prepared in this embodiment included a secondary particle and a coating material located on at least partial surface of the secondary particle, and the coating material was a polymer. The secondary particle included a carbon material and the primary particle, which were dispersed with each other. The primary particle included a plurality of silicon grains.

Remaining parameters of the anode material in this embodiment were shown in Table 1.

### Embodiment 5

(1) Silicon simple substance powder and silicon fine powder (SiO₂) were well mixed according to a molar ratio of 1:1 and then placed in a vacuum sintering furnace, the vacuum sintering furnace was vacuumed to 0.075 Pa and then heated to 1650 °C at a heating rate of 10 °C/min, then a pressure was maintained at 9 Pa, and after temperature holding was performed for 8 h, an intermediate was obtained.
(2) The intermediate was placed in an atmosphere furnace, under argon atmosphere protection, heating was performed to 1000 °C at the heating rate of 30 °C/min, then temperature holding was performed for 12 h, and a precursor was obtained through cooling.
(3) 100 g of the precursor was dissolved in 100 g of a well-prepared etching solution, an etching reaction was performed for 2 h, a reaction temperature in the entire etching process was maintained below 20 °C, the etching solution used a mixed solution in which a mass ratio of hydrofluoric acid: water: ethanol: ammonium fluoride is 6:3:1:3, and after the reaction was completed, a primary particle was obtained after centrifugation and drying.
(4) 500 g of silicon particles were put into a rotary atmosphere furnace, under argon atmosphere protection, a temperature was heated to 1000 °C with a heating rate of 5 °C/min, a 2 L/min propane gas was introduced to cause a volume ratio of argon in the rotary atmosphere furnace to propane to be 9:1, after the temperature was held for 8 h, a silicon-carbon composite was obtained through cooling.
(5) 100 g of the silicon-carbon composite was put into the rotary atmosphere furnace, under the protection of the argon atmosphere, the temperature was heated to 1000 °C with the temperature rising rate of 10 °C/min, a 4 L/min acetylene gas was introduced to cause a volume ratio of argon in the rotary atmosphere furnace to acetylene to be 9:1, the acetylene gas was turned off after the temperature was held for 6h, and an anode material was obtained after cooling.

The anode material prepared in this embodiment included a secondary particle and a coating material located on at least partial surface of the secondary particle, and the coating material was a polymer. The secondary particle included a carbon material and the primary particle, which were dispersed with each other. The primary particle included a plurality of silicon grains.

Remaining parameters of the anode material in this embodiment were shown in Table 1.

### Embodiment 6

(1) Silicon simple substance powder and silicon fine powder (SiO₂) were well mixed according to a molar ratio of 1:1 and then placed in a vacuum sintering furnace, the vacuum sintering furnace was vacuumed to 0.075 Pa and then heated to 1550 °C at a heating rate of 10 °C/min, then a pressure was maintained at 9 Pa, and after temperature holding was performed for 7 h, an intermediate was obtained.
(2) The intermediate was placed in an atmosphere furnace, under argon atmosphere protection, heating was performed to 600 °C at the heating rate of 1 °C/min, then temperature holding was performed for 24 h, and a precursor was obtained through cooling.
(3) 100 g of the precursor was dissolved in 100 g of a well-prepared etching solution, an etching reaction was performed for 2 h, a reaction temperature in the entire etching process was maintained below 20 °C, the etching solution used a mixed solution in which a mass ratio of hydrofluoric acid: water: ethanol: ammonium fluoride is 6:3:1:3, and after the reaction was completed, a primary particle was obtained after centrifugation and drying.
(4) 500 g of silicon particles were put into a rotary atmosphere furnace, under argon atmosphere protection, a temperature was heated to 600 °C with a heating rate of 5 °C/min, a 3 L/min propane gas was introduced to cause a volume ratio of argon in the rotary atmosphere furnace to propane to be 9:1, after the temperature was held for 8 h, a silicon-carbon composite was obtained through cooling.
(5) 100 g of the silicon-carbon composite was put into the rotary atmosphere furnace, under the protection of the argon atmosphere, the temperature was heated to 600 °C with the temperature rising rate of 1 °C/min, a 4 L/min acetylene gas was introduced to cause a volume ratio of argon in the rotary atmosphere furnace to acetylene to be 9:1, the acetylene gas was turned off after the temperature was held for 6h, and an anode material was obtained after cooling.

The anode material prepared in this embodiment included a secondary particle and a coating material located on at least partial surface of the secondary particle, and the coating material was a polymer. The secondary particle included a carbon material and the primary particle, which were dispersed with each other. The primary particle included a plurality of silicon grains.

Remaining parameters of the anode material in this embodiment were shown in Table 1.

### Embodiment 7

(1) Silicon simple substance powder and silicon fine powder (SiO₂) were well mixed according to a molar ratio of 1:1 and then placed in a vacuum sintering furnace, the vacuum sintering furnace was vacuumed to 0.06 Pa and then heated to 1250 °C at a heating rate of 10 °C/min, then a pressure was maintained at 5 Pa, and after temperature holding was performed for 6 h, an intermediate was obtained.
(2) The intermediate was placed in an atmosphere furnace, under argon atmosphere protection, heating was performed to 700 °C at the heating rate of 1 °C/min, then temperature holding was performed for 18 h, and a precursor was obtained through cooling.
(3) 100 g of the precursor was dissolved in 100 g of a well-prepared etching solution, an etching reaction was performed for 4 h, a reaction temperature in the entire etching process was maintained below 20 °C, the etching solution used a mixed solution in which a mass ratio of hydrofluoric acid: water: ethanol: ammonium fluoride is 6:3:1:3, and after the reaction was completed, a primary particle was obtained after centrifugation and drying.
(4) 500 g of silicon particles were put into a rotary atmosphere furnace, under argon atmosphere protection, a temperature was heated to 700 °C with a heating rate of 5 °C/min, a 2 L/min acetylene gas was introduced to cause a volume ratio of argon in the rotary atmosphere furnace to acetylene to be 9:1, after the temperature was held for 12 h, a silicon-carbon composite was obtained through cooling.
(5) 100 g of the silicon-carbon composite was put into the rotary atmosphere furnace, under the protection of the argon atmosphere, the temperature was heated to 700 °C with the temperature rising rate of 1 °C/min, a 4 L/min acetylene gas was introduced to cause a volume ratio of argon in the rotary atmosphere furnace to acetylene to be 9:1, the acetylene gas was turned off after the temperature was held for 3h, and an anode material was obtained after cooling.

The anode material prepared in this embodiment included a secondary particle and a coating material located on at least partial surface of the secondary particle, and the coating material was a polymer. The secondary particle included a carbon material and the primary particle, which were dispersed with each other. The primary particle included a plurality of silicon grains.

Remaining parameters of the anode material in this embodiment were shown in Table 1.

### Embodiment 8

A difference between this embodiment and Embodiment 1 lied in that,
(1) Silicon simple substance powder and silicon fine powder (SiO₂) were well mixed according to a molar ratio of 1:0.9 and then placed in a vacuum sintering furnace, the vacuum sintering furnace was vacuumed to 0.06 Pa and then heated to 1250 °C at a heating rate of 3 °C/min, then a pressure was maintained at 5 Pa, and after temperature holding was performed for 4 h, an intermediate was obtained.

### Embodiment 9

A difference between this embodiment and Embodiment 1 lied in that,
(4) 500 g of silicon particles were put into a rotary atmosphere furnace, under argon atmosphere protection, a temperature was heated to 950 °C with a heating rate of 3 °C/min, a 0.5 L/min acetylene gas was introduced to cause a volume ratio of argon in the rotary atmosphere furnace to acetylene to be 9:1, after the temperature was held for 8 h, an anode material was obtained through cooling.

### Embodiment 10

A difference between this embodiment and Embodiment 1 lied in that,
Step (3) was not performed.

### Comparative embodiment 1

(1) Silicon simple substance powder and magnesium powder were well mixed according to a ratio of 1:1 and then placed in a sintering furnace, argon was introduced at 1 L/min, then heating was performed to 650 °C at a heating rate of 3 °C/min, and after the temperature was held for 4 h, a reaction product was obtained.
(2) The reaction product was added to 1 mol/L hydrochloric acid. After mechanical stirring was performed for 2 h, and centrifugation, washing, and drying were performed to obtain a silicon precursor.
(3) 500 g of the silicon precursor were put into a rotary atmosphere furnace, under argon atmosphere protection, a temperature was heated to 950 °C with a heating rate of 3 °C/min, a 0.5 L/min acetylene gas was introduced to cause a volume ratio of argon in the rotary atmosphere furnace to acetylene to be 9:1, after the temperature was held for 4 h, a silicon-carbon composite was obtained through cooling.
(4) 10 g of the silicon-carbon composite was taken and dissolved in 100 g of anhydrous ethanol, 1 g of polyacrylic acid was added, then mechanical stirring was performed for 30 minutes, and by means of spray drying, and a drying temperature was controlled at 100 °C to cause a surface of the silicon-carbon complex to be coated with a polymer, so as to obtain an anode material.

### Comparative embodiment 2

A difference between this embodiment and Embodiment 1 lied in that,
Steps (1) and (2) of preparing a precursor were not performed, 100 g of silicon simple substance powder was directly taken, step (3) and subsequent reactions were performed.

### Performance test

### 1) Median particle size of anode material:

A method for testing the median particle size of the anode material was referred to GB/T 19077-2016. Determination was performed by a Mastersizer 3000 laser particle size analyzer from Malvern Instruments Ltd. In volume reference distribution, a cumulative 50% diameter was D50, sequential analogy, a cumulative 90% diameter was D90, and a cumulative 10% diameter was D10.

### 2) Method for testing specific surface area of anode material:

A device used was a TriStar3000&3020 fully automatic surface area and aperture analyzer from Micromeritics Instrument Corp, and executed according to a national standard GB/T 19587-2017. At constant temperature and low temperature, adsorption capacities of gases with different relative pressures on a surface of a solid were determined, and then an adsorption capacity of a single molecule layer of a sample was solved based on a Brunauer-Emmett-Teller adsorption theory and a formula (BET formula) thereof, so as to calculate the specific surface area of the material.

### 3) Method for testing tap density:

A powder tap density (BT tap density) was tested by using a DAT-6-220 powder tap density instrument from Quantachrome Instruments. According to a national standard GB/T 5162-2006/ISO 3953:1993, a certain amount of a sample was weighed, and vibration was performed for 3000 times at 300 times/min, so as to test the tap density.

### 4) Method for testing oxygen content and carbon content:

The oxygen content was measured by using a Nicolet Is10 Fourier infrared spectrometer from Thermo Fisher Scientific, and the content of a carbon layer was tested by a thermogravimetric analysis method.

### 5) SEM test:

SEM characterization was performed on an S4800 field emission electron microscope from Hitachi, an operating voltage was 200 kV, and a structure of the anode material and a thickness of a coating layer were observed for scaling.

### 6) Method for testing average size of primary particles:

An E3500 ion grinder and the S4800 field emission electron microscope from Hitachi were used to measure the average size of the particles.

### 7) Method for testing average particle size of silicon grains:

An XRD diagram of the sample was measured by using a TD-3600 X-ray diffractometer from Dandong Tongda Science & Technology Co,. Ltd. A width of half peak of a diffraction peak of the sample and a corresponding bragg angle were obtained by jade software. An average grain size of the silicon grains was calculated by a Scherrer equation D=Kγ/B cosθ. The obtained average grain size was used to represent the average particle size of the grains.

### 8) Method for testing thickness of coating layer:

The E3500 ion grinder and the S4800 field emission electron microscope from Hitachi were used to perform section treatment on the material. Thicknesses of a particle modification layer and protective layer were measured in the SEM.

Through the above tests, the anode material prepared in Embodiments 1-9 and Comparative embodiment 1 had sample numbers corresponding to S1-S9 and R1; and performance parameters of the anode material were shown in Table 1.

**Table 1: Performance parameters of anode material**

| Performance parameter | S1 | S2 | S3 | S4 | S5 | S6 | S7 | S8 | S9 | S10 | R1 | R2 |
|---|---|---|---|---|---|---|---|---|---|---|---|---|
| Median particle size of anode material (D50, µm) | 5.3 | 4.5 | 4.5 | 7.2 | 7.0 | 3.3 | 3.8 | 5.3 | 5.4 | 5.4 | 8.5 | 5.3 |
| Specific surface area (m²/g) | 5.8 | 4.2 | 6.6 | 8.5 | 9.2 | 2.0 | 12.4 | 5.5 | 5 | 35 | 20 | 3 |
| Tap density (g/cm³) | 0.8 | 0.7 | 0.75 | 0.79 | 0.9 | 0.6 | 1.2 | 0.83 | 0.78 | 0.95 | 0.5 | 0.9 |
| Compaction density (g/cm³) | 1.2 | 1.4 | 1.46 | 1.8 | 1.7 | 1.5 | 1.8 | 1.26 | 1.23 | 1.9 | 0.85 | 1.3 |
| Oxygen content (%) | 5 | 6 | 7 | 7 | 8 | 4 | 3 | 4.5 | 4.2 | 26 | 10 | 3 |
| Silicon content (%) | 48 | 52 | 68 | 79 | 72 | 46 | 75 | 50 | 45 | 35 | 55 | 75 |
| Average particle size of silicon matrix (nm) | 50 | 40 | 80 | 100 | 100 | 25 | 60.3 | 55 | 50 | 51 | 18 | 60 |
| Average particle size of silicon grain M0 (nm) | 3.5 | 1.5 | 0.1 | 10 | 20 | 0.2 | 0.3 | 4 | 3.6 | 3.4 | 15 | 5 |
| Average particle size of silicon grain M1 (nm) | 5 | 35 | 49.5 | 12 | 20.2 | 22.2 | 60.3 | 6 | 5.2 | 6 | 75 | 65 |
| Crystallization instability degree F | 0.429 | 22.3 | 494 | 0.2 | 0.01 | 110 | 200 | 0.5 | 0.444 | 0.76 | 4 | 12 |
| Pore volume (cm³/g) | 0.05 | 0.06 | 0.1 | 0.2 | 0.12 | 0.02 | 0.18 | 0.045 | 0.04 | 0.01 | 0.32 | 0.02 |
| Thickness of coating layer (nm) | 50 | 200 | 200 | 100 | 80 | 180 | 30 | 50 | 60 | 50 | 50 | 65 |

### 10) Electrochemical testing:

The anode material was mixed with sodium carboxymethyl cellulose, styrene-butadiene rubber, conductive graphite (KS-6), and carbon black (SP) respectively in a ratio of 92:2:2:2:2, so as to prepare slurry, the mixture was uniformly coated on copper foil and dried to prepare into an anode plate; a button battery was assembled in an argon atmosphere glove box; a diaphragm used was a polypropylene microporous membrane; an electrolyte solution used was 1 mol/L of lithium hexafluorophosphate (a solvent being a mixed solution of ethylene carbonate, ethyl methyl carbonate, and dimethyl carbonate); and a counter electrode used was a metallic lithium sheet.

The 10 sets of batteries were subjected to specific discharge capacity testing on a blue lightning CT2001A battery testing system; and a ratio of a discharge capacity in 1 hour to a battery capacity is a specific discharge capacity.

A first coulombic efficiency test was performed on the 10 groups of batteries on the blue lightning CT2001A battery testing system; and a charging and discharging current was 0.05 C, and first coulombic efficiency was measured.

A 100-cycle circulation test was performed on the 10 groups of batteries on the blue lightning CT2001A battery testing system; and the charging and discharging current was 0.2 C, and post-cycle battery capacity and post-cycle capacity retention were tested and calculated after 100 cycles of circulation.

Capacity retention at 0.2 C after 100 cycles of circulation = discharging capacity of the 100th cycle of circulation/discharging capacity of the first cycle *100%. Results were shown in Table 2.

**Table 2 Parameter performance comparison table of various batteries**

| Sample | Discharge specific capacity (mAh/g) | First coulombic efficiency (%) | Capacity at 0.25 C after 50 cycles of circulation (mAh/g) | Capacity retention at 0.25 C after 50 cycles of circulation (%) | Expansion rate of electrode film (%) |
|---|---|---|---|---|---|
| S1 | 2588 | 89.2 | 2427.5 | 93.8 | 23.4 |
| S2 | 2501 | 86.7 | 2310.9 | 92.4 | 24.7 |
| S3 | 2248 | 84.8 | 1989.5 | 88.5 | 26.6 |
| S4 | 2122 | 84.4 | 1880 | 88.6 | 24.5 |
| S5 | 2334 | 83.8 | 2100 | 90.1 | 33.6 |
| S6 | 1980 | 87.8 | 1853.28 | 93.6 | 28.9 |
| S7 | 2265 | 85.9 | 1995.47 | 88.1 | 29.5 |
| S8 | 2611 | 89.2 | 2331.1 | 89.3 | 25.9 |
| S9 | 2385 | 88.2 | 2109 | 88.4 | 26.3 |
| S10 | 1698 | 82.2 | 1236 | 72.8 | 28.4 |
| R1 | 2168 | 79.1 | 1550.1 | 71.5 | 45.1 |
| R2 | 3100 | 87.2 | 1620 | 52.3 | 55.2 |

As shown in Table 2, in the anode materials prepared in Embodiments 1 to 10, by controlling the crystallization instability degree of the anode material to be F, where 0.01≤F≤500, a grain boundary surface energy of the silicon grain might be reduced, a stress concentration phenomenon caused by the anode material including the silicon grain in a lithium deintercalation process might be attenuated, an electrochemical sintering phenomenon of the anode material after lithium intercalation was improved, the structure stability of the anode material including the silicon grain in a lithiation process was improved, and an expansion rate of the anode material was reduced, facilitating formation of a stable solid-state electrolyte membrane on a surface of the anode material, thereby improving the electrochemical performance of the anode material. Furthermore, in the secondary particle of the anode material, the carbon material and the primary particles are dispersed mutually, the conductivity of the primary particle might be effectively improved, and volume expansion of the anode material including the silicon grains could also be effectively relieved. Partial carbon material was located on the surface of the secondary particle, such that the volume expansion of the anode material might be further relieved, and side reactions between the silicon grain and electrolyte might also be effectively reduced. Meanwhile, the structure stability of the anode material was improved, such that the anode material had low expansion, high cycling stability, high rate performance, and high first coulombic efficiency.

In the process of preparing the anode material in Comparative embodiment 1, the crystallization instability degree F of the anode material was too large, indicating that the size of the silicon grain was too small, electrochemical sintering easily occurred on the surface of the silicon grain, the silicon grain grew after sintering, and local stress of the anode material became larger after lithium deintercalation, resulting in an increase in the instability of the entire structure, leading to reduction in the cycling performance and capacity of the anode material, thus deteriorating the electrochemical performance of the anode material.

## Claims

1. An anode material, comprising a primary particle, wherein the primary particle comprises silicon grains;
an average particle size of the silicon grains of the anode material measured at 25 °C is M₀ nm; after the anode material is heated to 1000 °C under nitrogen protection and then subjected to temperature holding for 1 h, the average particle size of the silicon grains of the anode material measured at a temperature naturally cooled to 25 °C is M₁ nm;
a crystallization instability degree of the anode material is F, wherein F=(M₁-M₀)/M₀, M₁ > M₀, and 0.01≤F≤500.

2. The anode material according to claim 1, meeting at least one of the following features:
(1) after the anode material is heated to 1000 °C at a heating rate of 5 °C/min and then subjected to temperature holding for 1 h, the average particle size of the silicon grains of the anode material measured at the temperature naturally cooled to 25 °C is M1 nm, wherein 0.1 <M,≤50;
(2) the average particle size of the silicon grains of the anode material measured at 25 °C is M0 nm, wherein 0.1≤M₀≤20.

3. The anode material according to claim 1, wherein an average particle size of the primary particles is 1 nm-100 nm.

4. The anode material according to claim 1, comprising a secondary particle, wherein the secondary particle comprises a matrix and the primary particle dispersed in the matrix.

5. The anode material according to claim 4, wherein the primary particle has pores, and at least part of the matrix is distributed in the pores of the primary particle.

6. The anode material according to claim 4, wherein the matrix comprises a carbon material, and the carbon material comprises at least one of amorphous carbon and graphitized carbon.

7. The anode material according to claim 4, further comprising a coating material located on at least partial surface of the secondary particle, wherein the coating material comprises at least one of an amorphous carbon material, a graphitized carbon material, and a polymer.

8. The anode material according to claim 7, wherein the coating material meets at least one of the following features:
(1) the coating material comprises the polymer, wherein the polymer comprises at least one of polyacrylic acid, polyacrylonitrile, polyimide, polyurethane, polydopamine, xanthan gum, polypyrrole, polythiophene, polyphenylacetylene, polyaniline, polyacetylene, and tannic acid;
(2) the coating material comprises the polymer, and a thickness of a coating layer formed by the coating material is 50 nm-300 nm;
(3) the coating material comprises the graphitized carbon material, and the thickness of the coating layer formed by the coating material is 5 nm-100 nm;
(4) the coating material comprises the amorphous carbon material, and the thickness of the coating layer formed by the coating material is 10 nm-500 nm.

9. The anode material according to any one of claims 1 to 8, meeting at least one of the following features:
(1) a mass content of carbon in the anode material is 5%-80%;
(2) a mass content of oxygen in the anode material is less than 15%;
(3) a mass content of silicon in the anode material is 40%-80%.

10. The anode material according to any one of claims 1 to 8, wherein a pore volume of the anode material is 0.01 cm³/g-0.2 cm³/g.

11. The anode material according to any one of claims 1 to 8, wherein a median particle size of the anode material is 0.5 µm-26 µm.

12. The anode material according to any one of claims 1 to 8, wherein a specific surface area of the anode material is 0.8 m²/g-40 m²/g.

13. The anode material according to claim 1, wherein a powder tap density of the anode material is 0.3 g/cm³-1.3 g/cm³.

14. The anode material according to claim 1, wherein a powder compaction density of the anode material is 1.2 g/cm³-1.8 g/cm³.

15. A battery, comprising the anode material according to any one of claims 1 to 14.
